# EUROPÄISCHE PATENTSCHRIFT

(11) **EP 0 964 879 B1**
(45) Veröffentlichungstag und Bekanntmachung des Hinweises auf die Patenterteilung: **09.06.2004**
(21) Anmeldenummer: 98913675.9
(22) Anmeldetag: 06.03.1998
(51) Int. Cl.: C08F 218/08, C04B 24/26

(54) **VERFAHREN ZUR HERSTELLUNG VON SCHUTZKOLLOIDFREIEN DISPERSIONEN UND DISPERSIONSPULVERN**
METHOD FOR PRODUCING PROTECTIVE COLLOID-FREE DISPERSIONS AND DISPERSION POWDERS
PROCEDE DE PRODUCTION DE DISPERSIONS EXEMPTES DE COLLOIDE PROTECTEUR ET POUDRES DE DISPERSION

(30) Priorität: 06.03.1997 DE 19709254
(43) Veröffentlichungstag der Anmeldung: 22.12.1999
(73) Patentinhaber: Wacker-Chemie GmbH, 81737 München (DE)
(72) Erfinder: WEITZEL, Hans-Peter, D-84571 Reischach (DE); FIGGE, Reiner, D-84539 Ampfing (DE); BRAUNSPERGER, Robert, D-84489 Burghausen (DE)
(74) Vertreter: Schuderer, Michael, Dr.
(86) Internationale Anmeldenummer: PCT/EP1998/001314
(87) Internationale Veröffentlichungsnummer: WO 1998/039371

(56) Entgegenhaltungen:
- FR-A- 2 183 810
- GB-A- 835 651
- US-A- 3 714 096

## Beschreibung

Die Erfindung betrifft ein Verfahren zur Herstellung von schutzkolloidfreien Dispersionspulvern durch Sprühtrocknung der Dispersionen.

In Wasser redispergierbare Dispersionspulver auf der Basis von Vinylesterpolymerisaten sind aus dem Stand der Technik bekannt und werden vor allem zur Modifizierung von hydraulisch abbindenden Baustoffmassen eingesetzt. Diese redispergierbaren Dispersionspulver werden im allgemeinen durch Sprühtrocknung der entsprechenden wässrigen Dispersionen der Vinylesterpolymerisate hergestellt. Um die Redispergierbarkeit der sprühgetrockneten Dispersionspulver in Wasser zu gewährleisten werden bei der Polymerisation in wässriger Dispersion und/oder beim Sprühtrocknungsprozeß Schutzkolloide zugegeben.

In der EP-A 632096 (US-A 5567750) wird die Sprühtrocknung von wässrigen Vinylester-Polymerisaten in Gegenwart von Polyvinylalkohol als Verdüsungsschutzkolloid beschrieben. Aus der EP-A 78449 (Derwent-Abstract AN 83-46976K) ist bekannt, die Verdüsung unter Zusatz von Naphthalinsulfonsäure-Formaldehyd-Kondensationsprodukten durchzuführen. Die EP-A 407889 (US-A 5225478) beschreibt die Verdüsung von wässrigen Polymerdispersionen in Gegenwart von Phenolsulfonsäure-Formaldehyd-Kondensationsprodukten. Aus der EP-A 134451 (Derwent-Abstract AN 85-069875) ist die Herstellung von Dispersionspulvern durch Sprühtrocknung wässriger Dispersionen in Gegenwart von Stärken oder Proteinen bekannt.

Die Verwendung von Schutzkolloiden bei der Herstellung von redispergierbaren Dispersionspulvern bringt aber eine Reihe von Nachteilen mit sich. Die Schutzkolloide sind relativ teuer, müssen aber in deutlichen Mengen zur Sicherstellung einer ausreichenden Redispergierbarkeit bzw. Blockfestigkeit eingesetzt werden. Bei den erforderlichen Einsatzmengen wird der relative Bindemittelgehalt der Dispersionspulver reduziert und die anwendungstechnischen Eigenschaften der Dispersionspulver negativ beeinflußt. Darüberhinaus kann der Schutzkolloid-Zusatz die Dispersionspulver wasseranfällig machen und die Rheologie der Redispersion beeinflußen.

Es bestand daher die Aufgabe, ein Verfahren zur Herstellung von in Wasser redispergierbaren, schutzkolloidfreien Dispersionspulvern auf der Basis von Vinylester-Polymerisaten zur Verfügung zu stellen.

Ein emulgatorfreies und schutzkolloidfreies Dispersionspulver ist aus der DE-A 2222033 (US-A 3950302) bekannt. Nachteilig ist, daß der Herstellungprozeß für die darin beschriebene Polymerdispersion nicht reproduzierbar ist.

Die EP-A 295727 betrifft die Herstellung von Vinylacetat-Ethylen-Copolymer-Dispersionen für die Anwendung in Coatings, wobei zur Reduzierung des Tacks ein tertiärer Vinylester (VeoVa9^{R}) copolymerisiert wird. Die damit erhältlichen Copolymerisate können auch als schutzkolloidfreie Dispersionen und Dispersionspulver eingesetzt werden. In der EP-A 315278 wird gelehrt zur Erhöhung des Umsatzes bei der Copolymerisation von Vinylacetat, Ethylen und tertiären Vinylestern, diese in Gegenwart von Acrylsäureestern durchzuführen. Die EP-A 518406 betrifft die Herstellung von schutzkolloidfreien Dispersionen von Vinylacetat-Copolymerisaten mit Vinylpivalat, wobei ein oder mehrere wasserlösliche Comonomere copolymerisiert werden. Mit den darin beschriebenen Verfahrensweisen werden zwar schutzkolloidfreie Dispersionen zugänglich, die damit erhältlichen Polymerpulver zeigen aber nur sehr mäßige Redispergierbarkeit.

Gegenstand der Erfindung ist ein Verfahren zur Herstellung von schutzkolloidfreien, in Wasser redispergierbaren Dispersionspulvern durch Sprühtrocknung von schutzkolloidfreien, wässrigen Dispersionen von Vinylester-Copolymerisaten erhältlich durch radikalische Emulsionspolymerisation von
40 bis 99.5 Gew% Vinylacetat,
0 bis 40 Gew% eines oder mehrerer Alkene,
0 bis 40 Gew% eines oder mehrerer Monomere aus der Gruppe der vinylester von C₆- bis C₁₂-Alkylcarbonsäuren, der (Meth)-Acrylsäureester von Alkoholen mit 1.bis 12 C-Atomen, und gegebenenfalls weiteren copolymerisierbaren, ein- oder mehrfach ethylenisch ungesättigten Monomeren,
0.5 bis 20 Gew% ethylenisch ungesättigter Carbonsäureamide oder deren Derivate,
in Gegenwart von 0.1 bis 5 Gew% ein oder mehrerer Emulgatoren aus der Gruppe der anionischen und nichtionischen Emulgatoren, und Persulfat-Initiator,
wobei die Sprühtrocknung ohne Zusatz von Schutzkolloiden, und in einem erhitzten Trockengasstrom mit einer Austrittstemperatur des Trockengases im Bereich von 45°C bis 100°C, durchgeführt wird.

Die Angaben in Gew% sind dabei jeweils auf das Gesamtgewicht der Comonomere bezogen.

Geeignete Alkene sind beispielsweise Ethylen, Propen, Butadien, vorzugsweise Ethylen und Butadien, insbesondere Ethylen.

Bevorzugte Vinylester mit 6 bis 12 C-Atomen sind Vinylethylhexanoat, Vinyllaurat, Vinylester von alpha-verzweigten, tertiären Carbonsäuren mit 9 bis 11 C-Atomen wie VeoVa9^{R}, VeoVa10^{R} oder VeoVa11^{R}. Bevorzugt werden die Vinylester von alpha-verzweigten, tertiären Carbonsäuren mit 9 bis 11 C-Atomen.

Bevorzugte Carbonsäureamide sind Acrylamid, Methacrylamid. Bevorzugte Carbonsäureamid-Derivate sind N-Methylolacrylamid, N-Methylolmethacrylamid, N-Butoxymethyl-Acrylamid, N-Butoxymethyl-Methacrylamid, N-Isobutoxymethyl-Acrylamid und N-Isobutoxymethyl-Methacrylamid. Besonders bevorzugt sind Acrylamid und Methacrylamid; insbesondere Acrylamid.

Beispiele für Methacrylsäureester oder Acrylsäureester sind deren Methyl-, Ethyl-, Propyl-, n-Butyl-, i-Butyl-, t-Butylund 2-Ethylhexylester. Beispiele für weitere copolymerisierbare, ein- oder mehrfach ethylenisch ungesättigten Monomere sind Styrol, Vinylchlorid, Acrylsäure, Methacrylsäure, Fumarsäure und Maleinsäure sowie deren Monoester und Diester, Maleinsäureanhydrid, 2-Acrylamidopropansulfonsäure, Vinylsulfonsäure. Beispiele für mehrfach ethylenisch ungesättigte Comonomere sind Divinyladipat, 1,9-Decadien, Allylmethacrylat, Triallylcyanurat und vernetzende Comonomere wie Acrylamidoglykolsäure (AGA), Methacrylamidoglykolsäuremethylester (MAGME), Polyglykoldimethacrylat. Weitere Beispiele sind Si-haltige Monomere wie gamma-Acryloxypropyltriethoxysilan oder Vinyltriethoxysilan.

In einer bevorzugten Ausführungsform enthält die Comonomerphase 60 bis 98 Gew% Vinylacetat, 0 bis 30 Gew% Ethylen und 2 bis 10 Gew% ethylenisch ungesättigte Carbonsäureamide oder deren Derivate.

Die Herstellung nach dem Verfahren der wäßrigen Emulsionspolymerisation wird bei einer Polymerisationstemperatur von im allgemeinen 35°C bis 95°C, bevorzugt bei 40°C bis 80°C durchgeführt. Zur Initiierung der Polymerisation geeignete Persulfate sind Natriumpersulfat, Kaliumpersulfat und Ammoniumpersulfat. Die Initiatormenge beträgt vorzugsweise 0.01 bis 1.0 Gew%, bezogen auf das Gesamtgewicht der Comonomere. In einer bevorzugten Ausführungsform werden die Persulfate in Kombination mit der entsprechenden Menge an Reduktionsmittel eingesetzt. Geeignete Reduktionsmittel sind beispielsweise Alkaliformaldehydsulfoxylate, Hydroxymethansulfinsäure, Ascorbinsäure oder Natriumsulfit.

Geeignete anionische Emulgatoren sind beispielsweise Alkalimetallsalze von Di-C₄- bis -C₁₂-Alkylestern der Sulfobernsteinsäure; geeignet sind auch Alkalimetall- und Ammoniumsalze von C₈- bis C₁₂-Alkylsulfaten, von ethoxylierten Alkanolen mit C₁₂- bis C₁₈-Alkylrest und einem EO-Grad von 3 bis 50, von ethoxylierten C₄- bis C₁₀-Alkylphenolen mit einem EO-Grad von 3 bis 50, von C₁₂- bis C₁₈-Alkylsulfonsäuren, von C₉- bis C₁₈-Alkylarylsulfonsäuren und von Sulfonaten ethoxylierter, linearer und verzweigter C₈- bis C₃₆-Alkylalkohole mit einem EO-Grad von 3 bis 50. Geeignete nichtionische Emulgatoren sind beispielsweise ethoxylierte Fettalkohole mit C₈- bis C₃₆-Alkylrest und einem Ethoxylierungsgrad (EO-Grad) von 3 bis 50; ethoxylierte Mono-, Di- und Trialkylphenole mit C₄- bis C₁₀-Alkylrest und einem EO-Grad von 3 bis 50.

Vorzugsweise wird in Gegenwart von anionischem Emulgator oder von Kombinationen aus anionischem und nichtionischem Emulgator polymerisiert. Besonders bevorzugt werden Kombinationen aus Alkalimetallsalzen von Di-C₄- bis -C₁₂-Alkylestern der Sulfobernsteinsäure und aus ethoxylierten Fettalkoholen mit C₈- bis C₃₆-Alkylrest und einem Ethoxylierungsgrad (EO-Grad) von 3 bis 50. Die Gesamtmenge an Emulgator beträgt vorzugsweise 0.1 bis 5 Gew%, insbesonders 0.5 bis 3 Gew%, bezogen auf das Gesamtgewicht der Comonomeren.

Die Polymerisation kann im Batchverfahren, wobei alle Komponenten im Reaktor vorgelegt werden, und im Dosierverfahren, wobei einzelne oder mehrere Komponenten während der Polymerisation zugeführt werden, durchgeführt werden. Bevorzugt wird eine Vorgehensweise bei der ein Teil der Vinylacetat- bzw. Vinylestermonomere vorgelegt wird und der Rest während der Polymerisation zudosiert wird. Der Carbonsäureamid-Anteil wird vorzugsweise vollständig zudosiert. Die Initiatoren werden vorzugsweise vollständig zudosiert. Der Emulgatoranteil wird vorzugsweise teilweise vorgelegt und der Rest während der Polymerisation zudosiert. Die Dosierungen können separat (räumlich und zeitlich) durchgeführt werden oder die zu dosierenden Komponenten können alle oder teilweise voremulgiert dosiert werden. Die Dosierungen können mit konstanter Rate und mit wechselnden Raten durchgeführt werden.

Sollen beispielsweise gasförmige Reaktionskomponenten, wie Ethylen, eingesetzt werden, kann die Emulsionspolymerisation auch unter erhöhtem Druck durchgeführt werden. Wird unter Druck gearbeitet, sind Drücke von 5 bar bis 100 bar bevorzugt.

Entscheidend ist beispielsweise die Zielmenge an Ethylen, die einpolymerisiert werden soll.

Zur Steuerung des Molekulargewichts können während der Polymerisation regelnde Substanzen eingesetzt werden. Sie werden üblicherweise in Mengen zwischen 0.01 bis 5.0 Gew%, bezogen auf die zu polymerisierenden Monomeren, eingesetzt und separat oder auch vorgemischt mit den Reaktionskomponenten dosiert. Beispiele solcher Substanzen sind Dodecylmercaptan, Mercaptopropionsäure, Mercaptopropionsäuremethylester, Isopropanol und Acetaldehyd.

Die mit dem erfindungsgemäßen Verfahren erhältlichen wäßrigen Dispersionen haben einen Feststoffgehalt von 30 bis 75 Gew%, vorzugsweise von 40 bis 65 Gew%. Zur Herstellung der schutzkolloidfreien, in Wasser redispergierbaren Dispersionspulver werden die wäßrigen Dispersionen ohne Zusatz von Schutzkolloiden sprühgetrocknet.

Bei der Sprühtrocknung kann auf die bekannten Vorrichtungen, wie zum Beispiel Versprühen durch Ein-, Zwei- oder Mehrstoffdüsen oder mit einer rotierenden Scheibe, in einem erhitzten Trockengasstrom, vorzugsweise Luft, zurückgegriffen werden. Im allgemeinen werden Temperaturen über 250°C als Eintrittstemperatur des Trockengases nicht angewandt. Die Austrittstemperaturen des Trockengases liegen im Bereich von 45 bis 100°C, bevorzugt 55 bis 90°C, je nach Anlage, Polymerzusammensetzung und gewünschtem Trocknungsgrad.

Zur Trocknung werden die Dispersionen auf einen Festgehalt von 10 bis 75 Gew%, vorzugsweise 30 bis 65 Gew% eingestellt. Für die Sprühtrocknung hat sich eine Viskosität des Gesamtsystems von bis zu 1000 mPa.s bewährt. Bei der Verdüsung hat sich vielfach ein Gehalt von bis zu 1.5 Gew% Antischaummittel, bezogen auf das Basispolymerisat, als günstig erwiesen.

Zur Erhöhung der Lagerfähigkeit durch Verbesserung der Verblockungsstabilität, insbesonders bei Pulvern mit niedriger Glasübergangstemperatur, kann das erhaltene Pulver mit einem Antiblockmittel (Antibackmittel), vorzugsweise bis 30 Gew%, bezogen auf das Gesamtgewicht polymerer Bestandteile, versetzt werden. Dies erfolgt vorzugsweise, solange das Pulver noch fein verteilt ist, beispielsweise noch im Trockengas suspendiert ist. Insbesondere wird das Antiblockmittel getrennt aber gleichzeitig mit der Dispersion in die Trocknungsvorrichtung dosiert. Beispiele für Antiblockmittel sind fein gemahlene Aluminiumsilikate, Kieselgur, kolloidales Silicagel, pyrogene Kieselsäure, Fällungskieselsäure, Micro-Silica, Leichtspat, Kaolin, Talkum, Zemente, Diatomeenerde, Calciumcarbonat oder Magnesiumhydrosilikat.
Die mit den erfindungsgemäßen Verfahrensweisen erhältlichen schutzkolloidfreien Dispersionen und Dispersionspulver eignen sich als Bindemittel für Beschichtungen, Klebemittel, Putze und Anstriche. Besonders geeignet sind die schutzkölloidfreien Dispersionen und Dispersionspulver als Bindemittel für Beschichtungsmittel und Klebemittel für Textilien, und als Additive zur Veredelung von Bindemitteln in der Bauindustrie, insbesondere als Zusätze zu Beton, Bauklebern, Mörteln und Spachtelmassen.

### Beispiel 1:

### Herstellung einer schutzkolloidfreien Dispersion:

In einem Autoklaven mit 570 Liter Volumen, Rührer und Zuläufen für vier Dosierungen sowie Ethylenversorgung wurden 70.7 kg Wasser, 0.2 kg Essigsäure, 0.2 kg Diisohexylsulfosuccinat, 0.25 kg 10 %-ige Natronlauge und 14.7 kg Vinylacetat vorgelegt und auf 75°C erwärmt. Die Drehzahl betrug 140 Upm. Anschließend wurden 60 bar Ethylen aufgedrückt. Nach Erreichen der Reaktionsbedingungen wurde die Initiatordosierung (35 kg 3 %-ige Kaliumpersulfat-Lösung und 35 kg 1.5 %-ige Na-Formaldehydsulfoxylat-Lösung) gestartet. Nach 25 min wurde die Monomerdosierung (242.5 kg Vinylacetat, 13.2 kg VeoVa10) und die Emulgatordosierung (26.4 kg Wasser, 0.8 kg 10 %-ige NaOH, 36.6 kg 30 %-ige Acrylamid-Lösung, 2.75 kg 50 %-ige Acrylamidopropansulfonsäure-Lösung, 3.4 kg 40 %-ige Lösung eines sulfatisierten Alkylethoxylats mit 15 EO-Einheiten) gestartet. Beide Dosierungen liefen 5 Stunden. Die Innentemperatur wurde so geregelt, daß eine Reaktionstemperatur von 75°C beibehalten wurde. Der Druck wurde bis Monomerdosierende konstant auf 60 bar gehalten. Nach Ende der Monomerdosierung wurde der Initiator noch 1 h weiter dosiert. Danach wurde der Ansatz gekühlt und ab 60°C in einen geeigneten Kessel entspannt, wodurch überschüssiges Ethylen in das Abgassystem entsorgt wurde. Man erhielt eine Dispersion mit einem Polymergehalt von 60.2 %. Die dynamische Glastemperatur betrug -1°C.

### Beispiel 2:

### Herstellung eines schutzkolloidfreien Dispersions-Pulvers:

Die Dispersion aus Beispiel 1 wurde in einem konventionellen Sprühtrockner bei einer Eingangstemperatur von 120°C und einer Ausgangstemperatur von 80°C, unter Zugabe von 10 Gew% handelsüblichem Antiblockmittel,zu einem gut rieselfähigen Pulver getrocknet.

### Beispiel 3:

### Herstellung einer schutzkolloidfreien Dispersion:

In einen Autoklaven mit 570 Liter Volumen, Rührer und Zuläufe für vier Dosierungen sowie Ethylenversorgung wurden 70.2 kg Wasser, 0.2 kg Essigsäure, 0.2 kg Diisohexylsulfosuccinat, 0.25 kg 10 %-ige Natronlauge und 14.7 kg Vinylacetat vorgelegt und auf 75°C erwärmt. Die Drehzahl betrug 140 Upm. Anschließend wurden 70 bar Ethylen aufgedrückt. Nach Erreichen der Reaktionsbedingungen wurde die Initiatordosierung (53 kg 3 %-ige Kaliumpersulfat-Lösung und 53 kg 1.5 %-ige Na-Formaldehydsulfoxylat-Lösung) gestartet. Nach 25 min wurde die Monomerdosierung (139 kg Vinylacetat, 66 kg VeoVa10) und die Emulgatordosierung (21.1 kg Wasser, 0.7 kg 10 %-ige NaOH, 29.2 kg 30 %-ige Acrylamid-Lösung, 2.2 kg 50 %-ige Acrylamidopropansulfonsäure-Lösung, 2.7 kg einer 40 %-igen Lösung eines sulfatisierten Alkylethoxylats mit 15 EO-Einheiten) gestartet. Beide Dosierungen liefen 5 Stunden. Die Innentemperatur wurde so geregelt, daß eine Reaktionstemperatur von 75°C beibehalten wurde. Der Druck wurde bis Monomerdosierende konstant auf 70 bar gehalten. Nach Ende der Monomerdosierung wurde der Initiator noch 1 h weiter dosiert. Danach wurde der Ansatz gekühlt und ab 60°C in ein geeigneten Kessel entspannt.
Man erhielt eine Dispersion mit einem Polymergehalt von 54.5 %. Die dynamische Glastemperatur betrug -14°C.

### Beispiel 4:

### Herstellung eines schutzkolloidfreien Dispersionspulvers:

Die Dispersion aus Beispiel 3 wurde analog der Vorgehensweise aus Beispiel 2 zu einem gut rieselfähigen Pulver getrocknet.

### Vergleichsbeispiel 1:

### Herstellung einer schutzkolloidfreien Dispersion mit Acrylsäureanteil anstelle Acrylamidanteil:

In einen Autoklaven mit 5 Liter Volumen, Rührer und Zuläufe für vier Dosierungen sowie Ethylenversorgung wurden 804 g Wasser, 10.3 g Essigsäure, 1.5 g Diisohexylsulfosuccinat, 8 g 10 %-ige Natronlauge und 115 g Vinylacetat vorgelegt und auf 75°C erwärmt. Die Drehzahl betrug 300 Upm. Anschließend wurden 75 bar Ethylen aufgedrückt. Nach Erreichen der Reaktionsbedingungen wurde die Initiatordosierung (700 g 3 %-ige Kaliumpersulfat-Lösung und 700 g 1.5 %-ige Na-Formaldehydsulfoxylat-Lösung) gestartet. Nach 25 min wurde die Monomerdosierung (1250 g Vinylacetat, 340 g VeoVa10) und die Emulgatordosierung (667 kg Wasser, 5 g 10 %-ige NaOH, 85.5 g Acrylsäure, 17.1 g 50 %-ige Acrylamidopropansulfonsäure-Lösung, 21.4 g einer 40 %-igen Lösung eines sulfatisierten Alkylethoxylats mit 15 EO-Einheiten) gestartet. Beide Dosierungen liefen 5 Stunden. Die Innentemperatur wurde so geregelt, daß eine Reaktionstemperatur von 75°C beibehalten wurde. Der Druck wurde bis Monomerdosierende konstant auf 70 bar gehalten. Nach Ende der Monomerdosierung wurde der Initiator noch 1 h weiter dosiert. Danach wurde der Ansatz gekühlt und ab 60°C in ein geeigneten Kessel entspannt. Man erhielt eine Dispersion mit einem Polymergehalt von 39.6 %. Die dynamische Glastemperatur betrug -8°C.

### Vergleichsbeispiel 2:

### Herstellung eines schutzkolloidfreien Dispersionspulvers:

Die Dispersion aus Vergleichsbeispiel 1 wurde analog der Vorgehensweise aus Beispiel 2 zu einem gut rieselfähigen Pulver getrocknet.

### Vergleichsbeispiel 3:

### Herstellung einer schutzkolloidfreien Dispersion analog DE-A 2222033:

Es wurde analog dem Beispiel aus der DE-A 2222033 vorgegangen. Die Polymerisation konnte nicht initiiert werden. Es wurde keine Dispersion erhalten.

### Vergleichsbeispiel 4:

Es wurde eine schutzkolloidfreie Dispersion analog dem Beispiel aus der EP-A 518406 mit einem Gewichtsverhältnis VA/VV5 von 70/30 hergestellt.
Man erhielt eine Dispersion mit einem Polymergehalt von 54.4 %. Die dynamische Glastemperatur betrug 17°C.

### Vergleichsbeispiel 5:

Die gemäß Vergleichsbeispiel 4 erhaltene schutzkolloidfreie Dispersion wurde analog der Verfahrensweise aus Beispiel 2 sprühgetrocknet.

Zur Prüfung der Dispersionen und Dispersionspulver aus den Beispielen und Vergleichsbeispielen wurde die Redispergierbarkeit von Polymerfilmen hergestellt mit den Dispersionen getestet, die Redispergierbarkeit der Dispersionspulver getestet, und die Wasserfestigkeit von mit Dispersionspulver modifiziertem Zement überprüft.
Die Ergebnisse sind in der Tabelle zusammengefaßt.

### Meßmethoden:

### Redispergierbarkeit der mit den Dispersionen erhältlichen Polymerfilmen:

Auf einer Glasplatte wurde mit Hilfe eines Rakels ein Dispersionsfilm mit einer Naßschichtstärke von 500 µm aufgezogen. Der Film wurde dann 24 h bei 60°C getrocknet. Zur Überprüfung der Redispergierbarkeit wurde mittels einer Pipette ein Wassertropfen auf den Film aufgesetzt. Nach 60 sec wurde der Wassertropfen auf dem Film verrieben und die Redispergierbarkeit visuell beurteilt:
Note 1: Film redispergiert sofort; Note 2: Film redispergiert langsam; Note 3: Film redispergiert nur partiell; Note 4: Film redispergiert gar nicht.

### Redispergierbarkeit der Dispersionspulver:

Das durch Sprühtrocknung erhaltene Pulver wurde mit gleichen Gewichtsteilen Wasser versetzt und 5 min gerührt bis eine homogene Dispersion erhalten wurde. Anschließend wurde diese Dispersion in eine skalierte Glasröhre (7mm x 10cm) gegeben und das Ausmaß der Sedimentation nach 24 Stunden von nicht redispergierten Teilen beobachtet.
Note 1: kein Sediment; Note 2: 0.1 mm Absitz; Note 3: 0.5 mm Absitz; Note 4: 1 mm Absitz; Note 5: > 1 mm Absitz.

### Wasserfestigkeit des Zementfilms:

Aus gleichen Gewichtsteilen Zement (CEMI 32.5) und Dispersionspulver wurde ein Trockenmörtel bereitet der durch Zugabe von Wasser in eine gebrauchsfertige Masse überführt wurde. Mit Hilfe eines Rakels wurde ein Zementfilm einer Schichtdicke von 500 µm gezogen, der 48 h bei Raumtemperatur getrocknet wurde.

Auf diesen Zementfilm wurde mittels einer Pipette ein Wassertropfen aufgesetzt und die Wasserfestigkeit des Films durch Reiben mit dem Finger visuell beurteilt.
Note 1: Wasserfest; Note 2: Film zerfällt teilweise (geringe Wasserfestigkeit);
Note 3: Film zerfällt vollständig (nicht wasserfest).

Die erfindungsgemäßen Beispiele zeigen im Dispersionsfilm und im Pulver eine gute Redispergierbarkeit, während der Zementfilm gegen Wasser inert ist. Die Vergleichsbeispiele hingegen zeigen, daß die jeweiligen Produkte nicht hinreichend redispergierbar sind und in der zementären Anwendung Wasseranfälligkeit induzieren.

**Tabelle:**

| Beispiel | Redispergierbarkeit Dispersionsfilm | Redispergierbarkeit Pulver | Wasserfestigkeit Zementfilm |
|---|---|---|---|
| Beispiel 1 | 1 | - | - |
| Beispiel 2 | - | 2 | 1 |
| Beispiel 3 | 1 | - | - |
| Beispiel 4 | - | 2 | 1 |
| Vergleichsbeispiel 1 | 4 | - | - |
| Vergleichsbeispiel 2 | - | 4 | 3 |
| Vergleichsbeispiel 3 | - | - | - |
| Vergleichsbeispiel 4 | 4 | - | - |
| Vergleichsbeispiel 5 | - | 5 | 3 |

## Patentansprüche

1. Verfahren zur Herstellung von schutzkolloidfreien, in Wasser redispergierbaren Dispersionspulvern durch Sprühtrocknung von schutzkolloidfreien, wässrigen Dispersionen von Vinylester-Copolymerisaten erhältlich durch radikalische Emulsionspolymerisation von
40 bis 99.5 Gew% Vinylacetat,
0 bis 40 Gew% eines oder mehrerer Alkene,
0 bis 40 Gew% eines oder mehrerer Monomere aus der Gruppe der Vinylester von C6- bis C12-Alkylcarbonsäuren, der (Meth)Acrylsäureester von Alkoholen mit 1 bis 12 C-Atomen, und gegebenenfalls weiteren copolymerisierbaren, ein- oder mehrfach ethylenisch ungesättigten Monomeren,
0.5 bis 20 Gew% ethylenisch ungesättigter Carbonsäureamide oder deren Derivate,
in Gegenwart von 0.1 bis 5 Gew% ein oder mehrerer Emulgatoren aus der Gruppe der anionischen und nichtionischen Emulgatoren, und Persulfat-Initiator,
wobei die Sprühtrocknung ohne Zusatz von Schutzkolloiden, und in einem erhitzten Trockengasstrom mit einer Austrittstemperatur des Trockengases im Bereich von 45°C bis 100°C, durchgeführt wird,
wobei sich die Angaben in Gew% jeweils auf das Gesamtgewicht der Comonomere beziehen.

2. Verfahren nach Anspruch 1, **dadurch gekennzeichnet, daß** ein oder mehrere ethylenisch ungesättigter Carbonsäureamide oder Carbonsäureamid-Derivate copolymerisiert werden, aus der Gruppe umfassend Acrylamid, Methacrylamid, N-Methylolacrylamid, N-Methylolmethacrylamid, N-Butoxymethyl-Acrylamid, N-Butoxymethyl-Methacrylamid, N-Isobutoxymethyl-Acrylamid und N-Isobutoxymethyl-Methacrylamid

3. Verfahren nach Anspruch 1 oder 2, **dadurch gekennzeichnet, daß** bis zu 40 Gew% ein oder mehrere Alkene copolymerisiert werden, aus der Gruppe umfassend Ethylen, Propen, Butadien.

4. Verfahren nach Anspruch 1 bis 3, **dadurch gekennzeichnet, daß** ein Teil der Vinylacetat- und gegebenenfalls der Vinylestermonomere vorgelegt wird und der Rest während der Polymerisation zudosiert wird.

5. Verfahren nach Anspruch 1 bis 4, **dadurch gekennzeichnet, daß** der Carbonsäureamid-Anteil vollständig zudosiert wird.

6. Verfahren nach Anspruch 1 bis 5, **dadurch gekennzeichnet, daß** der Persulfat-Initiator vollständig zudosiert wird.

7. Verfahren nach Anspruch 1 bis 6, **dadurch gekennzeichnet, daß** der Emulgatoranteil teilweise vorgelegt und der Rest während der Polymerisation zudosiert wird.

8. Verwendung der Verfahrensprodukte nach Anspruch 1 bis 7 als Bindemittel und Additive für Beschichtungen, Klebemittel, Putze und Anstriche.

9. Verwendung der Verfahrensprodukte nach Anspruch 1 bis 7 als Zusätze zu Beton, Bauklebern, Mörteln, Spachtelmassen.

## Claims

1. Process for the preparation of dispersion powders which are free from protective colloids and redispersible in water, by spray drying of aqueous dispersions, which are free from protective colloids, of vinyl ester copolymers obtainable by free-radical emulsion polymerization of
40 to 99.5 % by weight of vinyl acetate,
0 to 40 % by weight of one or more alkenes,
0 to 40 % by weight of one or more monomers from the group consisting of vinyl esters of C₆- to C₁₂-alkyl-carboxylic acids and (meth)acrylic acid esters of alcohols having 1 to 12 C atoms, and, if appropriate, further copolymerizable mono- or polyethylenically unsaturated monomers, and
of 0.5 to 20 % by weight of ethylenically unsaturated carboxylic acid amides or derivatives thereof,
in the presence of 0.1 to 5 % by weight of one or more emulsifiers from the group consisting of anionic and nonionic emulsifiers, and a persulphate initiator,
the spray drying being carried out without the addition of protective colloids and in a heated stream of drying gas at an exit temperature of the drying gas in the range from 45°C to 100°C,
the data in % by weight in each case being based on the total weight of the comonomers.

2. Process according to Claim 1, **characterized in that** one of more ethylenically unsaturated carboxylic acid amides or carboxylic acid amide derivatives are copolymerized, from the group comprising acrylamide, methacrylamide, N-methylolacrylamide, N-methylolmethacrylamide, N-butoxymethylacrylamide, N-butoxymethylmethacrylamide, N-isobutoxymethylacrylamide and N-isobutoxymethylmethacrylamide.

3. Process according to Claim 1 or 2, **characterized in that** up to 40% by weight of one or more alkenes are copolymerized, from the group comprising ethylene, propene, butadiene.

4. Process according to Claim 1 to 3, **characterized in that** a portion of the vinyl acetate and, if appropriate vinyl ester monomers is initially introduced and the remainder is metered in during the polymerization.

5. Process according to Claim 1 to 4, **characterized in that** the carboxylic acid amide content is metered in in its entirety.

6. Process according to Claim 1 to 5, **characterized in that** the persulphate initiator is metered in in its entirety.

7. Process according to Claim 1 to 6, **characterized in that** the emulsifier content is preferably initially introduced in part, and the remainder is metered in during the polymerization.

8. Use of the process products according to Claim 1 to 7 as binders and additives for coatings, adhesives, plasters and paints.

9. Use of the process products according to Claim 1 to 7 as additives to concrete, building adhesives, mortars and filler compositions.

## Revendications

1. Procédé pour la préparation de poudres de dispersions redispersables dans l'eau, exemptes de colloïdes protecteurs, par séchage par atomisation de dispersions aqueuses, exemptes de colloïdes protecteurs, de copolymères d'esters vinyliques pouvant être obtenus par polymérisation radicalaire en émulsion de
40 à 99,5 % en poids d'acétate de vinyle,
0 à 40 % en poids d'un ou plusieurs alcènes,
0 à 40 % en poids d'un ou plusieurs monomères choisis dans le groupe des esters vinyliques d'acides alkyl(C₆-C₁₂)carboxyliques, des esters d'acide (méth)acrylique avec des alcools ayant de 1 à 12 atomes de carbone, et éventuellement d'autres monomères copolymérisables à une ou plusieurs insaturations éthyléniques,
0,5 à 20 % en poids de carboxamides à insaturation éthylénique ou de leurs dérivés,
en présence de 0,1 à 5 % en poids d'un ou plusieurs émulsifiants choisis dans le groupe des émulsifiants anioniques et des émulsifiants non ioniques, et d'un amorceur persulfate,
dans lequel le séchage par atomisation est effectué sans addition de colloïdes protecteurs,
et dans un courant de gaz sec chauffé, à une température de sortie du gaz sec dans la plage de 45°C à 100°C,
les données en % en poids se rapportant chacune au poids total des comonomères.

2. Procédé selon la revendication 1, **caractérisé en ce qu'**on copolymérise un ou plusieurs carboxamides ou dérivés de carboxamides, à insaturation éthylénique, choisis dans le groupe comprenant l'acrylamide, le méthacrylamide, le N-méthylolacrylamide, le N-méthylolméthacrylamide, le N-butoxyméthyl-acrylamide, le N-butoxyméthyl-méthacrylamide, le N-isobutoxyméthyl-acryalamide et le N-isobutoxyméthyl-méthacrylamide.

3. Procédé selon la revendication 1 ou 2, **caractérisé en ce qu'**on copolymérise jusqu'à 40 % en poids d'un ou plusieurs alcènes choisis dans le groupe comprenant l'éthylène, le propène, le butadiène.

4. Procédé selon l'une quelconque des revendications 1 à 3, **caractérisé en ce qu'**on dispose au préalable une partie du monomère acétate de vinyle et éventuellement des monomères ester vinylique et le reste est ajouté de façon réglée pendant la polymérisation.

5. Procédé selon l'une quelconque des revendications 1 à 4, **caractérisé en ce que** la quantité de carboxamide est en totalité ajoutée de façon réglée.

6. Procédé selon l'une quelconque des revendications 1 à 5, **caractérisé en ce que** l'amorceur persulfate est en totalité ajouté de façon réglée.

7. Procédé selon l'une quelconque des revendications 1 à 6, **caractérisé en ce que** la quantité d'émulsifiant est en partie disposée au préalable et le reste est ajouté de façon réglée pendant la polymérisation.

8. Utilisation des produits obtenus par le procédé selon l'une quelconque des revendications 1 à 7, en tant que liants et additifs pour des revêtements, des adhésifs, des enduits et des peintures.

9. Utilisation des produits obtenus par le procédé selon l'une quelconque des revendications 1 à 7, en tant qu'additifs au béton, à des colles pour le bâtiment, des mortiers, des mastics.
